# EUROPÄISCHE PATENTSCHRIFT

(11) **EP 1 215 941 B1**
(45) Veröffentlichungstag und Bekanntmachung des Hinweises auf die Patenterteilung: **05.04.2006**
(21) Anmeldenummer: 01129460.0
(22) Anmeldetag: 11.12.2001
(51) Int. Cl.: H05B 6/02, C21D 9/00, C21D 1/10

(54) **Vorrichtung zur Oberflächenvergütung metallischer Werkstücke durch induktive Wärmebehandlung mit Vermessung der räumlichen Position**
Apparatus for improving surfaces of metallic work pieces by induction heat treatment and measurement of spatial position
Dispositif d'amélioration de surfaces de pièces usinées par traitement thermique à induction et mesure de la position spatiale

(30) Priorität: 12.12.2000 DE 10061802
(43) Veröffentlichungstag der Anmeldung: 19.06.2002
(73) Patentinhaber: EFD Induction GmbH, 79106 Freiburg (DE)
(72) Erfinder: Wagner, Josef, 79353 Riegel (DE); Hirsch, Karl, 79111 Freiburg (DE)
(74) Vertreter: Goy, Wolfgang

(56) Entgegenhaltungen:
- DE-A- 3 537 513
- GB-A- 1 268 369
- US-A- 6 024 913
- PATENT ABSTRACTS OF JAPAN vol. 010, no. 292 (C-376), 3. Oktober 1986 (1986-10-03) & JP 61 106709 A (HIGH FREQUENCY HEATTREAT CO LTD), 24. Mai 1986 (1986-05-24)
- PATENT ABSTRACTS OF JAPAN vol. 007, no. 219 (C-188), 29. September 1983 (1983-09-29) & JP 58 117821 A (KOUSHIYUUHA NETSUREN KK), 13. Juli 1983 (1983-07-13)

## Beschreibung

Die Erfindung betrifft eine Vorrichtung zum Oberflächenvergüten metallischer Werkstücke durch induktive Wärmebehandlung nach dem Oberbegriff des Anspruchs 1.

Die induktive Wärmebehandlung stellt eine Methode dar, um die Oberfläche von metallischen Werkstücken zu vergüten. Das Grundprinzip besteht darin, daß durch ein von außen angelegtes Magnetfeld in dem zu behandelnden Werkstück induktiv Wärme erzeugt wird.

Die erfindungsgemäße Vorrichtung der eingangs angegebenen Art findet insbesondere bei der Erwärmung von komplexen Werkstücken Anwendung, welche mit enger Kopplung an den Induktor erwärmt werden müssen. Hier kann eine geringe Abweichung vom Sollabstand zwischen dem Induktor und dem Werkstück bereits einen großen Ergebnisunterschied in der Erwärmung verursachen.

Bisher werden die Induktoren ausschließlich auf einer Induktorlehre außerhalb der Maschine vermessen und gerichtet. Die so "präparierten" Induktoren werden dann in die Maschine eingebaut. Durch das vorherige Vermessen des Induktors oder des Werkstückes kann eine Zerstörung durch eine relative Schieflage zwischen Induktor und Werkstück verhindert werden. Allerdings können Verformungen innerhalb der Maschine bei der Montage des Induktors oder durch Kollisionen nicht erkannt werden. Ebenso werden Induktoren außerhalb der Maßtoleranz nicht erkannt, wenn diese nach einer Kollision durch Fehlbedienung nur unzureichend gerichtet werden.

Die US-A-6 024 913 zeigt eine Anlage zur induktiven Oberflächenhärtung von Werkstücken der eingangs angegebenen Art. Dabei sind Tische vorgesehen, welche in Längsrichtung sowie in Querrichtung der Anlage verschiebbar sind. Die Anlage besitzt darüber hinaus eine Justiereinrichtung zum Justieren des Werkstücks sowie weiterhin eine Induktionsspule ebenfalls mit zugeordneter Justiereinrichtung. - Der Funktionsablauf ist wie folgt: Für die induktive Oberflächenhärtung des Werkstücks werden zunächst die Tische derart verfahren, daß der auf dem Tisch angeordnete Justierring unterhalb der Durchmessermeßeinrichtung zu liegen kommt, welche nach unten verfahren wird und in den Justierring eintaucht. Auf diese Weise kann eine Justierung der Tische und damit - mittelbar - der darauf befindlichen Werkstücke vorgenommen werden. Nach dieser Justierung werden die Werkstücke mittels den Tischen in den Bereich der Induktionsspule verfahren, wo dann nacheinander die Induktionshärtung der Werkstücke erfolgt. - Der Nachteil bei dieser bekannten Meßeinrichtung zum Vermessen der räumlichen Position des Werkstücks besteht darin, daß die Positionsvermessung dieses Werkstücks mittelbar über den Justierring im Zusammenwirken mit der Durchmessermeßeinrichtung erfolgt, indem diese Durchmessermeßeinrichtung in den Justierring eintaucht. Sofern das Werkstück falsch auf den Tischen positioniert worden ist, werden durch diese Messung Positionsabweichungen des Werkstücks nicht erkannt, weil die Positionsmessung über den Justierring erfolgt. Zudem hat die bekannte Meßeinrichtung den Nachteil, daß sie Positionsabweichungen nur dadurch erkennt, daß die Durchmessermeßeinrichtung nicht exakt in den Justierring hineinpaßt. Eine konkrete Längenabweichung von der Soll-Position ist dadurch nicht ermittelbar.

Die DE-A-35 37 513 zeigt eine vollautomatisch arbeitende Induktionshärtemaschine, mit der eine höchstmögliche Reproduzierbarkeit durch exakte Positionierung von Induktor und Werkstückaufnahme erzielt werden soll. Der automatische Induktorwechsel erfolgt dabei gemäß einem abgespeicherten Programm.

Die JP-A-61 106 709 zeigt ein Verfahren zum Induktionshärten eines Zahnrades, wobei zwei Kontaktelemente vorgesehen sind, um Zähne des Zahnrades abzutasten.

Die JP-A-58 117 821 zeigt eine Induktionsspule sowie ein Werkstück. Ein Detektor soll eine Kollision der Spule mit dem Kopf des Werkstücks verhindern.

Die GB-A-1 268 369 schließlich zeigt ein Verfahren zum Oberflächenbeschichten eines Werkstücks.

Der Erfindung liegt die **Aufgabe** zugrunde, bei einer Vorrichtung zum Oberflächenvergüten metallischer Werkstücke durch induktive Wärmebehandlung der eingangs angegebenen Art die Meßeinrichtung zum Vermessen der räumlichen Position des Werkstücks relativ zum feststehenden Maschinengestell zu verbessern.

Die technische **Lösung** ist gekennzeichnet durch die Merkmale im Kennzeichen des Anspruchs 1. Vorteilhafte Weiterbildungen der Erfindung sind Gegenstand der abhängigen Ansprüche 2 bis 4.

Dadurch ist eine maßliche Kontrolle des Werkstücks dahingehend geschaffen, daß der Verfahrensablauf nicht durch Verformungen gestört wird, insbesondere daß der Induktor durch eine Verformung nicht mit dem Werkstück kollidiert und dadurch beschädigt wird. Somit kann mittels der speziellen erfindungsgemäßen Verfahrenstechnik die maßliche Kontrolle des Werkstücks realisiert werden. Bei einer Abweichung der Ist-Position von der Soll-Position kann der weitere Verfahrensablauf der Maschine gestoppt und die Störung beseitigt werden. Dadurch ist es erfindungsgemäß möglich, sowohl die Lage als auch die Maßhaltigkeit des Wertstückes und damit auch der Kontur zu vermessen und zu überwachen. Die Vermessung kann nach jedem Neustart der Maschine oder durch direkte Vorgabe nach einem bestimmten Zyklus oder durch einen Bedienerbefehl erfolgen. Im Extremfall kann vor jedem einzelnen Arbeitsvorgang eine Vermessung des Werkstücks durchgeführt werden. Die Messung erfolgt dabei durch Abtasten der Oberfläche. Darunter ist sowohl ein berührendes Abtasten als auch ein berührungsloses Abtasten mit entsprechenden Meßeinrichtungen zu verstehen. Bei der Meßeinrichtungen kann es sich um Laser-Meßköpfe, Potentiometer-Meßköpfe, induktiv arbeitende Meßköpfe, inkrementell arbeitende Meßköpfe, Schalter sowie optische Erkennungssysteme unter Verwendung einer Kamera handeln. Weitere Meßeinrichtungen sind denkbar. Zum Vermessen des Werkstücks wird auf der Oberfläche des Werkstücks ein Meßpunkt definiert und die Position dieses Meßpunktes bestimmt. Diese Position des Meßpunktes wird bezüglich des feststehenden Maschinengestells ermittelt. Das Grundprinzip der Meßeinrichtung mit dem verschwenkbaren Meßhebel und dem zugeordneten Meßtaster besteht darin, daß der Support über die Zugfeder den Meßhebel verschwenkt, bis die Spitze des Meßhebels in Anlage an die Wand des Werkstücks im Bereich einer Referenzfläche gelangt. Über den Meßtaster kann dann die Position des Meßhebels und damit die Oberflächenkontur des Werkstücks bestimmt werden.

Im Minimum reicht die Abtastung der Oberfläche an einem einzigen Punkt aus. Allerdings kann es bei dem Werkstück Verformungen geben, bei denen sich ein bestimmter Punkt im Raum trotz Verformung nicht verändert, so daß in diesem Fall fälschlicherweise das Ergebnis herauskommen kann, daß sich das Werkstück in der Soll-Position befindet. Die Weiterbildung gemäß Anspruch 2 hat demgegenüber den Vorteil, daß nach der ersten Messung das Werkstück verfahren und anschließend eine zweite Messung durchgeführt wird, an welche sich weitere Messungen anschließen können. Sofern keine Abweichung der ist-Meßpunkte von den Soll-Meßpunkten festgestellt wird, kann der Arbeitsablauf fortgesetzt werden. Stimmen die Meßdaten nicht mit den Soll-Vorgaben überein, erfolgt eine Meldung an die Bedienungsperson mittels des übergeordneten Systems, und das entsprechende Werkstück wird für die weitere Bearbeitung gesperrt. Somit kann mittels dieser Meßeinrichtung das Werkstück selbst nach Lage und Konturverlauf bei Bedarf bei jedem Erwärmungszyklus vermessen bzw. überprüft werden.

Die Weiterbildung hiervon gemäß Anspruch 3 schlägt die Messung auf mehreren Etagen vor.

Demgegenüber schlägt die Alternative hierzu gemäß Anspruch 4 eine kontinuierliche Messung vor, so daß auf diese Weise die gesamte Induktorlage mittels dieser kontinuierlichen Messung über die gesamte Länge des Induktors erfolgen kann. Damit kann auch eine konkave, konvexe oder auch einseitige Verformung innerhalb des Induktors erkannt werden.

Ein Ausführungsbeispiel der Erfindung wird nachfolgend anhand der Zeichnungen beschrieben. In diesen zeigt:
- Fig. 1: eine Draufsicht auf eine erste Meßvorrichtung, welche jedoch nicht zur Erfindung gehört;
- Fig. 2a und 2b: zwei Varianten des Induktors der Meßvorrichtung in Fig. 1;
- Fig.3: eine zweite Meßvorrichtung zum Vermessen des Induktors, welche jedoch ebenfalls nicht zur Erfindung gehört;
- Fig. 4a und 4b: die Meßvorrichtung der Fig. 3 in der Meßposition;
- Fig. 5a und 5b: die Meßvorrichtung der Fig. 3 in der Meßposition in einer anderen Ausrichtung;
- Fig. 6: ein erfndungsgemäßes Ausführungsbeispiel der Meßvorrichtung zum Vermessen eines Werkstückes;
- Fig. 7a und 7b: eine Draufsicht auf die Meßvorrichtung der Fig. 6.

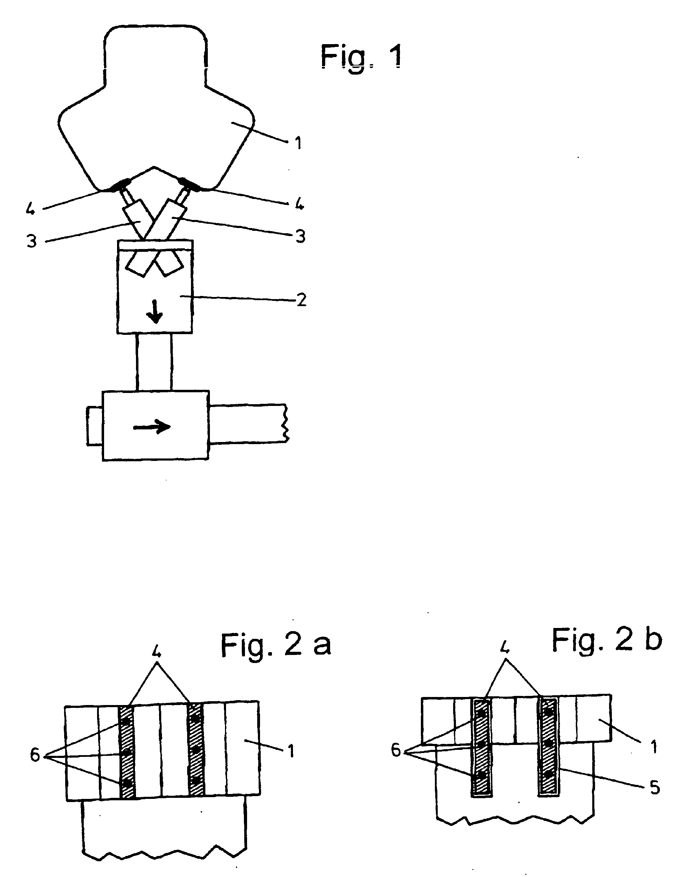

Die erste Meßvorrichtung der Fig. 1 sowie Fig. 2a und 2b zeigt einen Induktor 1 in der Form eines dreiflügeligen Sternes. An einem Verfahrsupport 2 sind zwei Meßtaster 3 angeordnet. Diese sind bezüglich zueinander nicht parallel ausgerichtet und schließen einen spitzen Winkel ein. Den vorderen Enden der Meßtaster 3 sind an dem Induktor 1 Referenzflächen 4 zugeordnet. Bei der Ausbildung des Induktors 1 in Fig. 2a erstrecken sich diese Referenzflächen 4 über die gesamte Höhe des Induktors 1. Die Ausführungsvariante des Induktors 1 in Fig. 2b zeigt einen Induktor 1, welcher relativ dünn ist. Aus diesem Grunde weist dieser Induktor 1 der Fig. 2b zusätzlich zwei nach unten ragende Fortsätze 5 auf, welche die Referenzflächen 4 definieren.

Die Funktionsweise der Meßvorrichtung der Fig. 1 sowie Fig. 2a und 2b ist wie folgt:

Mittels des Verfahrsupports 2 werden die beiden Meßtaster 3 an den Induktor 1 herangefahren, wie dies in Fig. 1 dargestellt ist. Die beiden Meßtaster 3 definieren dabei zwei Meßpunkte 6 in Form eines Meßpunkt-Paares auf den Referenzflächen 4. Diese Meßpunkte 6 mögen sich bei dem Induktor der Fig. 2a ganz oben befinden. Die Meßtaster 3 messen dabei die Positionen der beiden Meßpunkte 6. Nach Durchführung dieser ersten Messung wird der Induktor 1 nach oben verfahren, so daß die Positionen der beiden mittleren Meßpunkte 6 gemessen werden. Schließlich wird das untere Meßpunkt-Paar 6 des Induktors 1 vermessen. Sofern die Ist-Meßwerte mit den Soll-Meßwerten übereinstimmen, wird der weitere Ablauf - wie vorgesehen - durchgeführt. Sofern aber die Ist-Meßwerte von den Soll-Meßwerten abweichen, kann auf eine Verformung des Induktors 1 geschlossen werden. Dieser wird deshalb ausgebaut und auf einer Induktorlehre neu gerichtet, um ihn anschließend wieder in die Maschine einzubauen.

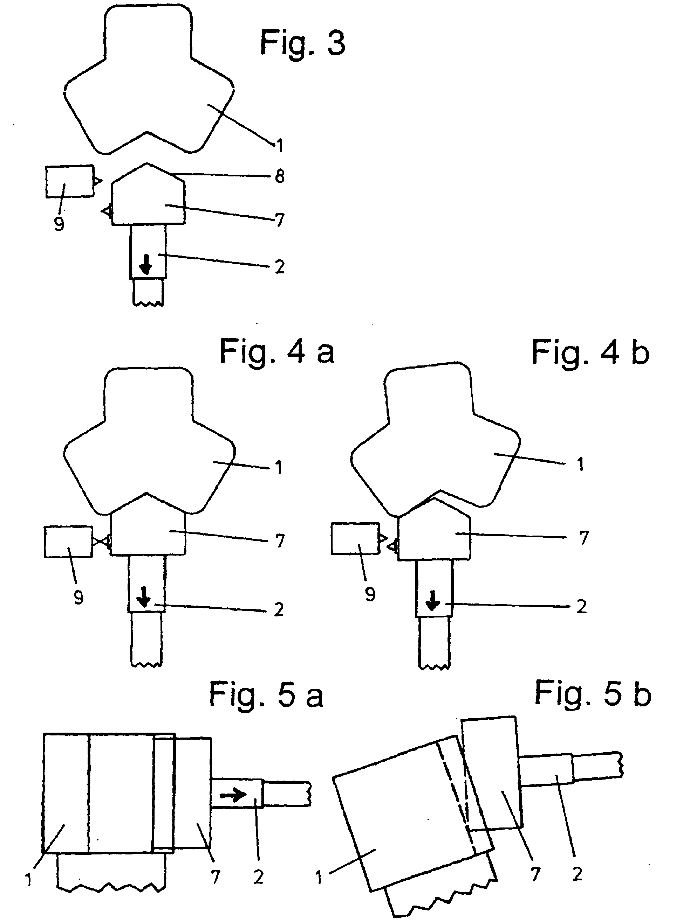

Die alternative Meßvorrichtung der Fig. 3, 4a und 4b sowie 5a und 5b weist statt der Meßtaster 3 der ersten Meßvorrichtung ein Formstück 7 vor, welches ebenfalls an einem Verfahrsupport 2 angeordnet ist. Die vordere Stimfläche 8 ist komplementär, d.h. als Negativform zu der zugewandten Seite des Induktors 1 ausgebildet.

Die Funktionsweise dieser zweiten Meßvorrichtung ist wie folgt:

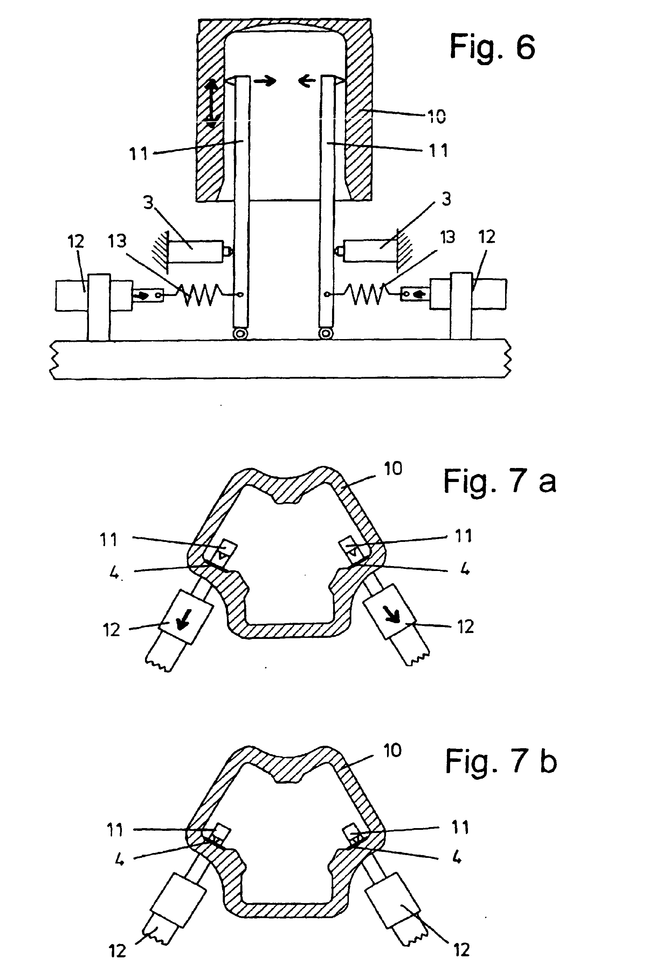

Die Grundstellung der Meßvorrichtung ist in Fig. 3 dargestellt. Dabei ist zu erkennen, daß dem Formstück 7 ein Meßtaster in Form eines Schaltelements 9 zugeordnet ist. Mittels des Verfahrsupports 2 wird das Formstück 7 in Richtung Induktor 1 verfahren. Sofern das Formstück 7 genau in die korrespondierende Kontur des Induktors 1 hineinpaßt, wird das Schaltelement 9 betätigt. Dieser Fall ist in Fig. 4a dargestellt. Der in Fig. 4b gezeigt Fall stellt die Situation dar, daß das Formstück 7 nicht in die zugehörige Kontur des Induktors 1 paßt. In diesem Fall wird das Schaltelement 9 nicht betätigt. Grund hierfür ist eine Verformung des Induktors 1, so daß die Maschine abgestellt wird. Bei der Verformung des Induktors 1 in Fig. 4b ist der Induktor 1 um seine Längsachse etwas gedreht. In Fig. 5b ist der Fall dargestellt, daß der Induktor 1 gekippt ist. Bei einer entsprechenden Kippung wird das Formstück 7 so verfahren, daß das Schaltelement 9 nicht betätigt wird und dies ein Indiz für das Vorliegen einer Verformung ist. Es kann aber im Vergleich zu der in Fig. 5a dargestellten richtigen Positionierung des Induktors auch der Fall eintreten, daß durch Zufall sich das Formstück 7 in der Soll-Position befindet, obwohl der Induktor 1 verformt ist. Um derartige Fehlinterpretationen auszuschließen, wird zusätzlich in einem zweiten Meßvorgang eine relative Vertikalbewegung zwischen dem Induktor 1 und dem Formstück 7 durchgeführt, so daß durch die Messung in dieser zweiten Ebene eine Abweichung von der Soll-Position des Induktors 1 und somit des Formstücks 7 gemessen wird.

Die erfindungsgemäße Meßvorrichtung betrifft das Vermessen eines Werkstücks 10, welches vom Grundprinzip her dem Meßverfahren der Fig. 1 sowie 2a und 2b entspricht. Es sind zwei Meßtaster 3 vorgesehen, welche in Wechselwirkung mit zwei verschwenkbaren Meßhebeln 11 stehen, welche mittels eines Supports 12 über Zugfedern 13 betätigt werden.

Das Funktionsprinzip dieser erfindungsgemäßen Meßvorrichtung ist wie folgt:

In der in Fig. 7a dargestellten Grundstellung sind die beiden Meßhebel 11 nach innen verschwenkt. Das Werkstück 10 wird über die Meßhebel 11 gestülpt. Die beiden Supports 12 ziehen über die Zugfedern 13 die Meßhebel 11 nach außen, bis die oberen Spitzen in Anlagen an die Innenwand des Werkstücks 10 im Bereich der Referenzflächen 4 gelangen. Dies ist in Fig. 6 sowie in Fig. 7b dargestellt. Über die Meßtaster 3 können die Positionen der Meßhebel 11 und damit die Oberflächekontur des Werkstücks 11 bestimmt werden. Nach dieser ersten Messung wird das Werkstück 10 senkrecht verfahren und eine zweite Messung durchgeführt. Weitere Messungen können sich anschließen. Sofern keine Abweichung der Ist-Meßpunkte von den Soll-Meßpunkten festgestellt wird, kann der Arbeitsablauf fortgesetzt werden. Stimmen die Meßdaten nicht mit den Sollvorgaben überein, erfolgt eine Meldung an die Bedienungsperson mittels des übergeordneten Systems und das entsprechende Werkstück 10 wird für die weitere Bearbeitung gesperrt. Somit kann mit diesem Verfahren das Werkstück 10 selbst nach Lage und Konturverlauf bei Bedarf bei jedem Erwärmungszyklus vermessen bzw. überprüft werden. Das Meßverfahren wird dabei in verschiedenen Meßebenen der Werkstücks 10 durchgeführt.

### Bezugszeichenliste

- 1: Induktor
- 2: Verfahrsupport
- 3: Meßtaster
- 4: Referenzfläche
- 5: Fortsatz
- 6: Meßpunkt
- 7: Formstück
- 8: Stirnfläche
- 9: Schaltelement
- 10: Werkstück
- 11: Meßhebel
- 12: Support
- 13: Zugfeder

## Patentansprüche

1. Vorrichtung zum Oberflächenvergüten metallischer Werkstücke (10) durch induktive Wärmebehandlung,
mit einem, an einem feststehenden Maschinengestell angeordneten Induktor (1), wobei dieser Induktor (1) sowie das ebenfalls am feststehenden Maschinengestell angeordnete Werkstück (10) relativ zueinander positionierbar sind, sowie
mit einer Meßeinrichtung zum Vermessen der räumlichen Position des Werkstücks (10) relativ zum feststehenden Maschinengestell,
**dadurch gekennzeichnet,**
**daß** die Meßeinrichtung einen verschwenkbaren Meßhebel (11) aufweist, welcher mittels eines Supports (12) über eine Zugfeder (13) betätigbar und in Anlage zu dem Werkstück (10) bringbar ist, so daß die Position eines Meßpunktes (6) einer Referenzfläche (4) am Werkstück (10) bestimmbar ist, und
**daß** dem Meßhebel (11) ein Meßtaster (3) zum Bestimmen der Position des Meßhebels (11) zugeordnet ist.

2. Vorrichtung nach dem vorhergehenden Anspruch,
**dadurch gekennzeichnet,**
**daß** das Werkstück (10) für wenigstens eine weitere Messung relativ zum Meßhebel (11) verfahrbar ist, so daß die Position wenigstens eines weiteren Meßpunktes (6) der Referenzfläche (4) am Werkstück (10) bestimmbar ist.

3. Vorrichtung nach Anspruch 2,
**dadurch gekennzeichnet,**
**daß** die weitere Messung nach Durchführen eines diskreten Schrittes durchführbar ist.

4. Vorrichtung nach Anspruch 2,
**dadurch gekennzeichnet,**
**daß** die weiteren Messungen während des Verfahrens durchführbar sind.

## Claims

1. Device for the surface hardening and tempering of metallic workpieces (10) by inductive heat treatment, comprising an inductor (1) arranged on a fixed machine frame, wherein this inductor (1) and the workpiece (10), which is also arranged on the fixed machine frame, can be positioned relative to one another, and comprising a measuring mechanism for measuring the spatial position of the workpiece (10) relative to the fixed machine frame, **characterised in that** the measuring mechanism has a pivotable measuring lever (11), which can be actuated by means of a support (12) by way of a tension spring (13) and can be brought to rest on the workpiece (10), so the position of a measuring point (6) of a reference area (4) can be determined on the workpiece (10), and **in that** measuring callipers (3) for determining the position of the measuring lever (11) are associated with the measuring lever (11).

2. Device according to the preceding claim, **characterised in that** the workpiece (10) can be moved relative to the measuring lever (11) for at least one further measurement, so the position of at least one further measuring point (6) of the reference area (4) can be determined on the workpiece (10).

3. Device according to claim 2, **characterised in that** the further measurement can be carried out after carrying out a discrete step.

4. Device according to claim 2, **characterised in that** the further measurements can be carried out during the movement.

## Revendications

1. Dispositif d'amélioration de la surface de pièces métalliques (10) par traitement thermique à induction,
avec un inducteur (1) disposé sur un bâti de machine fixe, cet inducteur (1) ainsi que la pièce (10) également disposée sur le bâti de machine fixe étant positionnables l'un par rapport à l'autre, ainsi que
avec un dispositif de mesure pour mesurer la position spatiale de la pièce (10) par rapport au bâti de machine fixe,
**caractérisé par le fait**
**que** le dispositif de mesure présente un levier de mesure (11) pivotant qui peut être actionné par un ressort de traction (13) au moyen d'un support (12) et amené en appui sur la pièce (10) de telle manière qu'il soit possible de déterminer la position d'un point de mesure (5) d'une surface de référence (4) de la pièce (10), et
**qu'**un palpeur de mesure (3) servant à déterminer la position du levier de mesure (11) est associé au levier de mesure (11).

2. Dispositif selon la revendication précédente,
**caractérisé par le fait**
**que** la pièce (10) est déplaçable par rapport au levier de mesure (11) pour au moins une autre mesure de telle manière qu'il soit possible de déterminer la position d'au moins un autre point de mesure (6) de la surface de référence (4) de la pièce (10).

3. Dispositif selon la revendication 2,
**caractérisé par le fait**
**que** l'autre mesure est exécutable après exécution d'un pas discret.

4. Dispositif selon la revendication 2,
**caractérisé par le fait**
**que** les autres mesures sont exécutables pendant le procédé.
